# EUROPÄISCHE PATENTSCHRIFT

(11) **EP 1 159 598 B1**
(45) Veröffentlichungstag und Bekanntmachung des Hinweises auf die Patenterteilung: **19.07.2006**
(21) Anmeldenummer: 00910635.2
(22) Anmeldetag: 01.02.2000
(51) Int. Cl.: G01N 15/02

(54) **VORRICHTUNG UND VERFAHREN ZUR SIMULTANEN IN-SITU-BESTIMMUNG DER TEILCHENGRÖSSE UND MASSENKONZENTRATION VON FLUIDGETRAGENEN PARTIKELN**
DEVICE AND METHOD FOR SIMULTANEOUS IN-SITU DETERMINATION OF PARTICLE SIZE AND MASS CONCENTRATION OF FLUID-BORNE PARTICLES
DISPOSITIF ET PROCEDE POUR LA DETERMINATION IN SITU SIMULTANEE DE LA TAILLE ET DE LA CONCENTRATION MASSIQUE DE PARTICULES PORTEES PAR UN FLUIDE

(30) Priorität: 05.02.1999 DE 19904691
(43) Veröffentlichungstag der Anmeldung: 05.12.2001
(73) Patentinhaber: Esytec Energie- und Systemtechnik GmbH, 91054 Erlangen (DE)
(72) Erfinder: LEIPERTZ, Alfred, D-91054 Erlangen (DE); WILL, Stefan, D-90491 Nürnberg (DE); SCHRAML, Stephan, D-90765 Fürth (DE)
(86) Internationale Anmeldenummer: PCT/EP2000/000781
(87) Internationale Veröffentlichungsnummer: WO 2000/052449

(56) Entgegenhaltungen:
- DE-C- 19 606 005
- US-A- 4 415 265
- US-A- 4 605 535

## Beschreibung

Die Erfindung betrifft eine optoelektronische Meßeinrichtung sowie ein Verfahren zur In-situ Charakterisierung von fluidgetragenen Teilchen im Submikrometerbereich.

Zur Bestimmung von Partikelkenngrößen wie Teilchengröße und Konzentration sind eine Vielzahl verschiedener Verfahren bekannt und gebräuchlich. Während konventionelle Verfahren wie die Elektronenmikroskopie nur eine Offline- bzw. Ex-Situ-Charakterisierung erlauben und meist der Absaugung eines Teilgasstromes bedürfen, ermöglichen optische Verfahren und Einrichtungen die In-situ-Bestimmung relevanter Kenngrößen. So ermöglicht es eine bekannte Vorrichtung (United- States Patent US 5815264) die zu untersuchenden Partikel zu beleuchten und das elastisch zurückgestreute Licht auf einen zweidimensionalen optischen Detektor abzubilden. Die geometrische, hochauflösende Abbildung der Einzelpartikel erlaubt die Teilchengrößenbestimmung jedoch nur, solange die Teilchengröße im Bereich der verwendeten Lichtwellenlänge oder darüber liegt. Desweiteren ist das Verfahren lediglich in einem begrenzten Teilchenkonzentrationsbereich anwendbar, da einerseits die Teilchen auf dem Detektor visuell trennbar sein müssen und andererseits sichergestellt werden muß, daß bei der hohen zu realisierenden Vergrößerung und dem entsprechend kleinem Untersuchungsvolumen zumindest ein einziges Teilchen abgebildet wird. Weitere Defizite ergeben sich aus der geringen Tiefenschärfe der optischen Abbildung, die zu unterschiedlichen Abbildungsmaßstäben für verschiedene Tiefen und damit zu Ungenauigkeiten in der Größenbestimmung führen. Femer ist zur Bestimmung der Partikelgröße eine Vorrichtung bekannt, die die Emission eines laserinduzierten Plasmas auswertet (United States Patent US 5316983). Dazu wird die Plasmaemission hinsichtlich ihrer Intensität, ihres räumlichen Auftretens und ihres zeitlichen Verlaufs, sowie die Stärke der dadurch induzierten Schallwellen ausgewertet . Ein weiteres optisches Verfahren, das durch Bestrahlung von Partikeln und die anschließende Auswertung von thermischer Strahlung und Streulicht innerhalb eines Laserresonators, die Bestimmung von Partikelzusammensetzung und Teilchengröße ermöglicht (Europäisches Patent EP 0837316A2), beruht auf der Prüfung der Verdampfbarkeit, der Bestimmung der Teilchentemperatur und des Verhältnisses aus elastischem Streusignal und thermischer Strahlung und ist auf den Einsatz mehrerer verschiedener optischer Detektoreinheiten und eine nicht frei wählbare geometrische Anordnung angewiesen. Damit ergibt sich insbesondere ein erheblicher apparativer und technischer Aufwand, der die Anwendbarkeit des Verfahrens stark einschränkt und die Wirtschaftlichkeit deutlich in Frage stellt. Ein zusätzlicher, prinzipieller Nachteil des invasiven Verfahrens liegt darin begründet, daß verschiedene Teilchen durch die Lasereinwirkung vollständig verdampft werden und eine anschließende physikalische und/oder chemische Analyse nicht möglich ist. Der Einsatz optischer Verfahren erfordert die optische Zugänglichkeit der Versuchsträger und ist folglich auf konstruktive Modifikationen angewiesen. Während zur Bestimmung der Aggregatgröße, zum Beispiel über kombinierte Streu-und Extinktionsmessungen oder die Erfassung von elastischem Streulicht unter verschiedenen Winkeln, verschiedene Verfahren und Vorrichtungen bekannt sind (z.B. nach J. A. Pinson, D. L. Mitchell, R J. Santoro und T. A. Litzinger, SAE Technical Paper Series 932650, Society of Automotive Engineers, Warrendale, Pa., 1993), existiert für die Primärpartikelgröße lediglich ein einziges Verfahren, das die In-situ-Messung dieser Kenngröße durch Auswertung der thermischen Teilchenstrahlung ermöglicht (Deutsches Patent DE 19606005). Gebräuchliche Vorrichtungen und Verfahren zur Erfassung der Teilchenkonzentration beruhen meist auf der Abschwächung von Licht oder der Filterung und anschließenden Auswertung der Filterbeladung. Weiterhin ist ein Verfahren bekannt, das die Konzentrationsmessung von Ruß durch Detektion der Planckschen Wärmestrahlung nach Laseranregung mittels einer schnellen Digitalkamera erlaubt (Japanisches Patent JP 08-094526A). Das zweidimensional abbildende Verfahren ist hierbei jedoch auf eine rechtwinkelige Anordnung von Laserlichtschnitt und Detektor angewiesen, was eine starke Einschränkung der Anwendbarkeit innerhalb technischer Systeme bedingt. Zur gleichzeitigen Erfassung von Primärpartikelgröße und Konzentration existiert bislang kein geeignetes In-situ-Verfahren.

Die Charakterisierung nanoskaliger Teilchen innerhalb verschiedener technischer und industrieller Systeme ist hinsichtlich vielfältiger Aufgabenstellungen von großer Bedeutung. So ist beispielsweise die industrielle Herstellung von Ruß und anderen technischen Pulvern auf geeignete Meßmethoden angewiesen, die sowohl eine Produktcharakterisierung als auch eine gezielte Prozeßregelung erlauben, ohne selbst in den Prozeß einzugreifen. Trotz der großen technischen Bedeutung sind die sich daraus ergebenden Anforderungen wie eine weitestgehend automatisierte Datenerfassung und -auswertung und die In-situ-Messung der Kenngrößen nach gegenwärtigem Stand der Technik ohne erhebliche konstruktive Veränderung der Versuchsträger durch keine existierende Vorrichtung zu erfüllen.
Aufgabe der Erfindung ist es deshalb, sowohl ein Verfahren als auch eine Meßvorrichtung zur Verfügung zu stellen, die eine simultane In-situ-Bestimmung von Primärpartikelgröße und Massenkonzentration verschiedenartiger Teilchen ermöglicht. Eine weitere Aufgabe der Erfindung ist es, eine Vorrichtung zur Bestimmung der Massenkonzentration und/oder Primärpartikelgröße aufzuzeigen, die eine leichte Applikation an verschiedene technische und industrielle Versuchsträger ermöglicht, auch wenn ein optischer Zugang nur von einer einzigen Seite aus möglich ist.
Diese Aufgaben werden durch die vorliegende Erfindung gelöst. Die Sensoreinheit nach Anspruch 1 erlaubt die simultane Bestimmung von Primärpartikelgröße und Massenkonzentration durch Auswertung der thermischen Strahlung nach gepulster Anregung. So kann beispielsweise die thermische Anregung mittels eines hochenergetischen Laserpulses erfolgen. Eine vorteilhafte Ausgestaltung verwendet hierbei kurze Pulse mit Pulsdauern um die 10 ns und Wellenlängen im sichtbaren Spektralbereich, wie sie zum Beispiel mit gepulsten Festkörperlasern erreicht werden können. Die Detektion erfolgt, nach geeigneter spektraler Filterung zum Beispiel zur Unterdrückung von Störstrahlung, beispielsweise mit einem zeitlich hochauflösenden Photomultipliermodul.

Die Sensoreinheit nach Anspruch 2 löst eine weitere der Aufgaben und erlaubt die Anregung und Detektion durch nur einen optischen Zugang, was im Hinblick auf optisch dichte Medien mit starker Absorption und auf schlecht zugängliche Versuchsträger besonders günstig ist. So kann bei der Detektion in Rückstreurichtung für beliebige optische Dichten stets ein ausreichend starkes Signal erfaßt werden. Die spektrale Selektion zwischen anregender Strahlung und Signal erfolgt hierbei durch geeignete dichroitische Elemente, wie Spiegel mit wellenlängenabhängigem Reflexions- bzw. Transmissionsgrad, außerhalb des Versuchsträgers oder durch eine räumliche Trennung der Strahlen, z.B. über ein Loch innerhalb eines vollreflektierenden Spiegels.

Das Verfahren nach Anspruch 9 löst die Aufgabe der simultanen Bestimmung der Primärpartikelgröße und der Massenkonzentration aus dem zeitlichen Signalverlauf nach thermischer Anregung, wobei lediglich ein Anregungsimpuls benötigt wird. Die simultane Bestimmung dieser beiden Kenngrößen erlaubt hierbei insbesondere auch die gleichzeitige Berechnung der Primärpartikelanzahldichte.

Vorteilhafte Varianten der Sensoreinheiten bzw. des Verfahrens nach den Ansprüchen 1, 2 und 9 sind in den abhängigen Ansprüchen beschrieben. So erfolgt beispielsweise die Detektion günstig mittels eines Sensormoduls, das alle wesentlichen optischen und elektronischen Komponenten, wie Abbildungsoptik, spektrale Filterung und Spannungsversorgung bereits integriert (Anspruch 3). Diese Ausführung erlaubt bei gleichzeitiger Verwendung faseroptischer Komponenten die Adaption der Sensoreinheit an den Versuchsträger ohne weiteren Justageaufwand (Anspruch 4), was im Hinblick auf den praktischen Einsatz und Wartungsaufwand der Vorrichtung von entscheidendem Vorteil ist. Als zusätzliche Komponenten, die die Einsatzmöglichkeiten der Vorrichtung erweitern und/oder die präzisere Bestimmung der Kenngrößen ermöglichen, können insbesondere solche zur simultanen Erfassung der elastischen Streustrahlung (Anspruch 6), zur simultanen Transmissionsmessung (Anspruch 7) und ein Temperatursensor (Anspruch 8) integriert werden. Das elastische Streusignal ermöglicht hierbei die Bestimmung eines zusätzlichen Größenparameters (Aggregatgröße, Anspruch 12), während die Temperaturmessung, die beispielsweise über ein Widerstandsthermometer oder ein Thermoelement durchgeführt wird, für eine genauere Auswertung der Primärpartikelgröße herangezogen wird. Ein wesentlicher Aspekt der Erfindung ist eine Bestimmung der benötigten Kenngröße(n) ohne oder mit nur geringen Modifikationen des Versuchsträgers. So erlaubt beispielsweise der Einsatz einer geeigneten, im Durchmesser variablen Einrichtung, an die bereits alle Anregungs-und Detektionskomponenten appliziert sind, die schnelle Adaption an oder in den Abgasstrang von Verbrennungssystemen, wie Motoren, ohne Modifikation des Abgasstrangs und eine anschließende Messung der Parameter ohne weiteren Justageaufwand (Anspruch 5). Dadurch wird auch der Einsatz als Standardmeßtechnik für Emissionsmessungen an Serienfahrzeugen ermöglicht. Die Integration einer simultanen Transmissionsmessung erlaubt die Kalibrierung der Teilchenkonzentration.
Der Einsatz eines Analog-Digitalwandlers und eines Mikroprozessors erweitert die Erfindung um eine automatisierte Erfassung, Speicherung und Auswertung der Meßdaten und Ergebnisdaten, was zum Beispiel eine direkte Prozeßregelung erlaubt. Diese Ausgestaltung ist als vorteilhaft einzustufen, da keine nachgeschaltete, separate Auswertung nötig ist und die Vorrichtung auch von Nichtfachleuten bedienbar wird. Die Datenauswertung für das Verfahren nach Anspruch 9 beinhaltet die simultane Bestimmung der Massenkonzentration, der mittleren Primärpartikelgröße und weiterer Parameter der entsprechenden Verteilungsfunktion, indem der zeitliche Verlauf des Signals vorzugsweise unter Berücksichtigung der Fluidtemperatur analysiert wird. Bei Einbeziehung eines Temperatunneßwertes, dessen Genauigkeit eine ungefähre Schätzung übersteigt, kann eine genauere Auswertung der Primärteilchengröße und/oder weiterer Parameter der Verteilungsfunktion realisiert werden. Dies beruht auf der Tatsache, daß das Abkühlverhalten vom Temperaturgradienten zwischen Teilchen und Fluid abhängt und somit eine genaue Temperaturmessung dieses Parameters die Genauigkeit der Meßwerte verbessert. Entsprechende theoretische Modelle sind beispielsweise zu finden in S. Will, S. Schraml und A. Leipertz, 26^{th} Symposium (International) on Combustion (The Combustion Institute, Pittsburgh, Pa., 1996), 2277-2284. In einer Variante kann das Verfahren so angewandt werden, daß ein Vergleich der kompletten Signalkurven mit einer Bibliothek berechneter Kurven erfolgt (Anspruch 10). Für die praktische Realisierung ist dabei die Nutzung einer Variante nach Anspruch 11 besonders vorteilhaft, bei der eine geeignete Bibliothek simultan zur Auswertung erzeugt wird. Zur Bestimmung der mittleren Primärteilchengröße kann bei punktuellen Messungen beispielsweise eine Signalabfallzeit τ an den experimentellen Signalverlauf angepaßt werden. Wenn eine nicht-monodisperse Größenverteilung vorliegt, können beispielsweise über die Anpassung einer Überlagerung mehrerer Exponentialfunktionen die komplette Teilchengrößenverteilungsfunktion oder weitere Parameter der Verteilung, wie beispielsweise die Breite, rekonstruiert werden.Gleichzeitig wird der maximale Signalwert zur Bestimmung der Volumen- bzw. Massenkonzentration ausgewertet, wobei durch Einbeziehung des Trübungswertes quantitative Werte ermittelt werden können. Dazu werden beispielsweise eine Lumineszenzdiode oder ein kompakter Diodenlaser und eine Photodiode oder ein Phototransistor in gegenüberliegender Anordnung eingesetzt. In einer weiteren Ausgestaltung kann die zur Anregung der thermischen Strahlung genutzte Strahlungsquelle gleichzeitig auch für die Transmissionsmessung eingestzt werden. Die Vorgehensweise bei der Kalibrierung ist beispielsweise ebenfalls in S. Will, S. Schraml und A. Leipertz, 26^{th} Symposium (International) on Combustion (The Combustion Institute, Pittsburgh, Pa., 1996), 2277-2284 beschrieben.
Bei einer zusätzlichen Erfassung des elastischen Streulichts, wie sie sich mit einer Sensoreinheit nach Anspruch 6 realisieren läßt, kann darüber hinaus ein Verfahren nach Anspruch 12 bereitgestellt werden, bei dem sich aus dem Maximalsignal der thermischen Strahlung und dem Streusignal simultan auch die Aggregatgröße bestimmen läßt. Die Erfassung des elastischen Streulichts erfolgt günstigerweise unter Einsatz eines auf die Anregungswellenlänge abgestimmten schmalbandigen Filters zur spektralen Trennung von Störsignalen. Zur Auswertung der Aggregatgröße wird der Quotient aus elastischem Streusignal und Maximalsignal der thermischen Strahlung gebildet, der proportional zu einer höheren Potenz des Aggregatdurchmessers ist (B. Quay, T.-W. Lee,T. Ni und R. J. Santoro, Combustion and Flame 97, S. 384-392, 1994).

Ausführungsbeispiele für die Erfindung sind in den Abbildungen dargestellt.

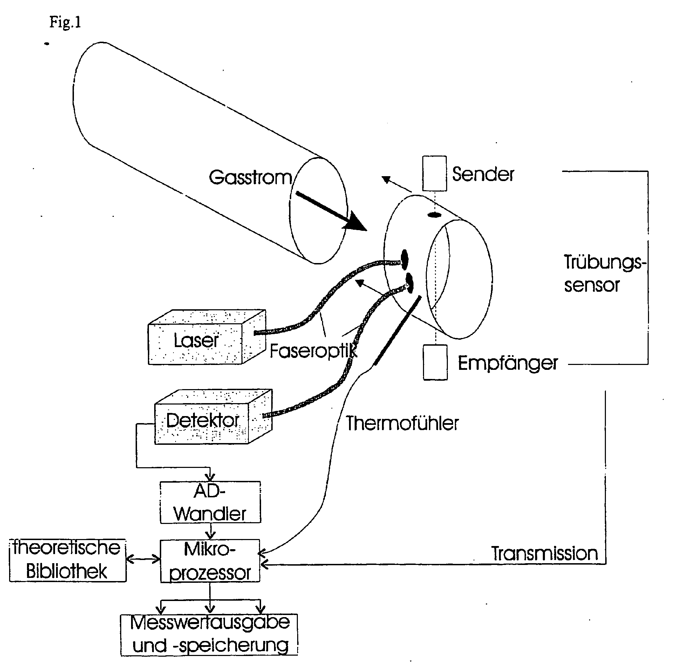

Fig. 1 stellt eine mögliche Einrichtung schematisch dar, die es ermöglicht, die Partikelkenngrößen innerhalb eines Rohres zu ermitteln, ohne Modifikationen am Versuchsträger durchzuführen. Dazu wird ein im Querschnitt angepaßtes Rohrstück angesetzt, daß alle für die Sensoreinheit wesentlichen Merkmale integriert. Die Einstrahlung und Detektions erfolgt hierbei mittels einer Faseroptik. Zusätzlich wird die Temperatur des Gasstromes erfaßt und zusammen mit dem Trübungswert der Datenauswertung zugeführt.

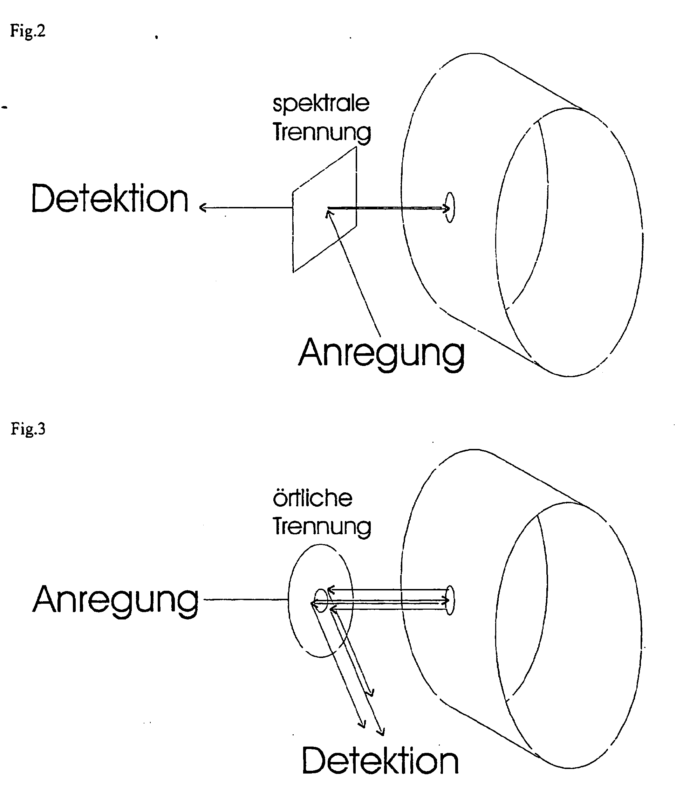

Fig. 2 und Fig. 3 zeigen mögliche Varianten, die jeweils nur einen einzigen, kleinen optischen Zugang erfordern, wobei außerhalb des Versuchsträgers eine Trennung zwischen Anregung und Signal stattfindet. In Fig. 2 wird diese Trennung durch den Einsatz einer spektral selektiven Komponente, zum Beispiel eines holograpischen Spiegels, bewerkstelligt, in Fig. 3 durch eine räumliche Trennung (Einstrahlung durch ein Loch innerhalb eines Spiegels).

## Patentansprüche

1. Optische Sensoreinheit zur simultanen Bestimmung der Primärpartikelgröße und Massenkonzentration fluidgetragener Teilchen,
**dadurch gekennzeichnet,**
**daß** gleichzeitig das Maximum und der zeitliche Verlauf der von den Teilchen ausgehenden thermischen Strahlung nach gepulster Anregung durch eine in das Fluid ragende oder durch eine das ruhende oder strömende Fluid umschließende, im Querschnitt angepaßte oder variable Meßanordnung, die eine Strahlungsemittereinheit und eine zeitlich hochauflösende optische Detektoreinheit aufweist, unter mindestens einem definierten Winkel oder Winkelbereich detektiert wird.

2. Optische Sensoreinheit zur Erfassung und Charakterisierung von fluidgetragenen Teilchen, bestehend aus einer Strahlungsemittereinheit und einer optischen Detektoreinheit,
**dadurch gekennzeichnet,**
**daß** zur Bestimmung der Primärpartikelgröße und/oder Massenkonzentration die optische Detektoreinheit so angeordnet ist, daß die von den Teilchen nach gepulster Anregung ausgehende thermische Strahlung unter der entgegengesetzt gleichen Richtung von der Detektoreinheit erfaßt wird, unter der die Anregung erfolgt, und spektral und/oder räumlich trennende optische Elemente bei der Erfassung der thermischen Strahlung eingesetzt werden.

3. Sensoreinheit nach einem der vorstehenden Ansprüche,
**dadurch gekennzeichnet,**
**daß** die Detektoreinheit einen oder mehrere optische Detektoren, jeweils bestehend aus einem Photomultiplier oder einem lichtempfindlichen Halbleiter, sowie eine geeignete Spannungsversorgung, geeignete Spektralfilter und eine Abbildungsoptik und/oder eine Ankopplung einer Lichtleitfaseroptik beinhaltet.

4. Sensoreinheit nach einem der vorstehenden Ansprüche,
**dadurch gekennzeichnet,**
**daß** die Anregung oder Detektion mittels einer fest justierten Faseroptik erfolgt.

5. Sensoreinheit nach einem der vorstehenden Ansprüche,
**dadurch gekennzeichnet,**
**daß** zur Charakterisierung von in Verbrennungssystemen entstehenden Partikeln eine im Durchmesser variable Vorrichtung an oder in den Abgasstrang des Verbrennungssystems integriert wird, die keinerlei weitere Modifikation des Abgasstrangs erfordert und die optischen Zugänge bereits beinhaltet.

6. Sensoreinheit nach einem der vorstehenden Ansprüche,
**dadurch gekennzeichnet,**
**daß** ein zusätzlicher Detektor zur simultanen Erfassung des elastischen Streusignals unter mindestens einem definierten Winkel integriert ist.

7. Sensoreinheit nach einem der vorstehenden Ansprüche,
**dadurch gekennzeichnet,**
**daß** eine Einrichtung zur simultanen Erfassung der Trübung des Fluids, bestehend aus einem Strahlungsemitter und einem diesem Emitter gegenüberliegend angeordneten Detektor integriert ist und zur Kalibrierung der Massen- und/oder Volumenkonzentration der Teilchen eingesetzt wird.

8. Sensoreinheit nach einem der vorstehenden Ansprüche,
**dadurch gekennzeichnet,**
**daß** eine Meßvorrichtung zur simultanen Bestimmung der Gastemperatur als Eingangsparameter für die Berechnung der Primärpartikelgröße integriert ist.

9. Verfahren zur simultanen Bestimmung der Massenkonzentration und eines oder mehrerer Parameter der Primärpartikelgrößenverteilungsfunktion fluidgetragener Teilchen,
**dadurch gekennzeichnet,**
**daß** gleichzeitig der maximale Signalwert und der zeitliche Signalabfall der von den Teilchen nach gepulster Anregung ausgehenden thermischen Strahlung innerhalb eines vorgegebenen Zeitintervalls gleichzeitig erfaßt und ausgewertet werden.

10. Verfahren zur Erfassung und Charakterisierung fluidgetragener Teilchen nach Anspruch 9,
**dadurch gekennzeichnet,**
**daß** zur Bestimmung von Parametern der Primärpartikelgrößenverteilungsfunktion eine Anpassung des experimentellen Signalabfalls und der Fluidtemperatur an eine Bibliothek entsprechender theoretischer Daten erfolgt.

11. Verfahren zur Erfassung und Charakterisierung fluidgetragener Teilchen nach Anspruch 9,
**dadurch gekennzeichnet,**
**daß** die Bibliothek theoretischer Daten durch Einbeziehung theoretischer Modelle simultan zur Auswertung erzeugt wird.

12. Verwendung einer Sensoreinheit nach einem der Ansprüche 6-8 in einem Verfahren nach einem der Ansprüche 9-11,
**dadurch gekennzeichnet,**
**daß** durch Auswertung des elastischen Streusignals zusätzlich die Aggregatgröße simultan bestimmt wird.

## Claims

1. An optical sensor unit for simultaneous determination of the size of primary particles and mass concentrations of fluid-borne particles, **characterized in that** the maximum and the temporal progression of the thermal radiation originating from the particles are simultaneously detected after a pulsed exciting by a measuring arrangement, being adjusted in its cross section or variable, protruding into the fluid or wrapping around the standing or flowing fluid which is provided with a radiation emitter unit and a temporally high-resolution optical detector unit with at least one defined angle or angle range.

2. An optical sensor unit for determining and characterizing fluid-borne particles comprising a radiation emitting unit and an optical detector unit, **characterized in that** for determining the primary particle size and/or mass concentration, the optical detector unit is arranged such that the thermal radiation originating from the particles after a pulsed exciting is determined by the detector unit in a direction precisely opposite to that in which the exciting occurs with spectrally and/or spatially selective optical units used in detecting the thermal radiation.

3. The sensor unit according to one of the preceding claims, **characterized in that** the detector unit includes one or more optical detectors, each comprising a photo multiplier or a light sensitive semiconductor as well as a suitable voltage source, suitable spectral filters, and a representing optic and/or a coupling of a light conducting fiber glass optic.

4. The sensor unit according to one of the preceding claims, **characterized in that** the exciting or detection occurs by means of a fixed adjusted fiber optic.

5. The sensor unit according to one of the preceding claims, **characterized in that** for characterizing particles developing in combustion systems a device variable in its diameter is integrated at or in the raw exhaust gas of the combustion system which requires no additional modification of the exhaust pipe and already includes the optical access.

6. The sensor unit according to one of the preceding claims, **characterized in that** an additional detector is integrated for a simultaneous detection of the elastic light scattering signal in at least one defined angle.

7. The sensor unit according to one of the preceding claims, **characterized in that** a device for the simultaneous detection of the turbidity of the fluid is integrated, comprising a radiation emitter and a detector arranged opposite it, and is used for calibrating the mass and/or volume concentration of the particles.

8. The sensor unit according to one of the preceding claims, **characterized in that** a measuring device for a simultaneous determination of the gas temperature is integrated as an entry parameter for the calculation of the primary particles size.

9. A process for simultaneous determination of mass concentration and one or more parameters of the primary particle size distribution function of fluid-borne particles, **characterized in that** simultaneously the maximal signal value and the temporal signal decay of the thermal radiation originating in the particles after a pulsed excitement are determined within a predetermined time interval and evaluated.

10. The process for determining and characterizing fluid-borne particles according to claim 9, **characterized in that** for determining the parameters of the primary particle size distribution function an adjustment of the experimental signal decay and of the fluid temperature occurs according to the theoretical data from a library.

11. The process for determining and characterizing fluid-borne particles according to claim 9, **characterized in that** the library of theoretical data is created simultaneously to the evaluation by including theoretical models.

12. An utilization of a sensor unit according to one of the claims 6 - 8 in a process according to one of the claims 9 - 11, **characterized in that** the aggregate size is additionally determined simultaneously by evaluating the elastic light scattering signal.

## Revendications

1. Unité de capteur optique pour la détermination simultanée de la grosseur des particules primaires et de la concentration de masse de corpuscule de fluide,
**caractérisée** de sorte que :
parallèlement, le déroulement maximum et temporel du rayonnement thermique émanant des corpuscules après une stimulation pulsée grâce à un dispositif de mesurage surgissant du fluide ou bien à un dispositif de mesurage entourant le fluide en repos ou circulant, adapté en coupe ou variable, qui présente une unité de rayonnement émetteur et une unité de détecteur optique de haute résolution temporelle, va être détecté au moins sous un angle défini ou un domaine d'angle.

2. Une unité de capteur pour la détection et la caractérisation de particules portées par le fluide, comprenant une unité de rayonnement d'émetteur et une unité de détection
**caractérisée** de sorte que :
l'unité de détection optique pour la détermination de la grosseur des particules et / ou de la concentration de masse, est disposée de sorte que le rayonnement thermique émanant des corpuscules après une stimulation pulsée, va être saisi sous la même direction contraire par l'unité de détection, sous laquelle l'activation a lieu, et ou des éléments optiques spectraux et/ou séparés vont être utilisés lors de la saisie du rayonnement thermique.

3. Une unité de capteur selon l'une des revendications précédentes, **caractérisée** de sorte que :
l'unité de détection d'un ou de plusieurs détecteurs, composés chacun d'un photomultiplicateur ou d'un semi-conducteur photosensible, ainsi qu'une alimentation de tension appropriée et une illustration optique et /ou comprend un couplage de fibre optique.

4. Une unité de capteur selon l'une des revendications précédentes, **caractérisée** de sorte que :
l'activation ou la détection est effectuée au moyen d'une optique des fibres ajustée.

5. Une unité de capteur selon l'une des revendications précédentes, **caractérisée** de sorte que :
pour la caractérisation de particules naissant dans des systèmes de combustion, un dispositif variable dans le diamètre est intégré au ou dans le système d'échappement du système de combustion, qui ne nécessite aucune modification du système d'échappement et qui comprend déjà les arrivées optiques

6. Une unité de capteur selon l'une des revendications précédentes, **caractérisée** de sorte que :
un détecteur supplémentaire pour la saisie simultanée du signal dispersé élastique est intégré sous au moins un angle défini.

7. Une unité de capteur selon l'une des revendications précédentes, **caractérisée** de sorte que :
un dispositif pour la saisie simultanée de la turbidité du fluide, composé d' un émetteur de rayonnement et d'un détecteur ordonné du côté opposé de cet émetteur, est intégré et est utilisé pour le calibrage de la concentration des masses et/ou des volumes des corpuscules.

8. Une unité de capteur selon l'une des revendications précédentes, **caractérisée** de sorte que :
un dispositif de mesure pour la détermination simultanée de la température du gaz est intégré en tant que paramètre d'entrée pour le calcul de la grandeur des particules primaires.

9. Procédé pour la détermination simultanée de la concentration de masses et d'un ou de plusieurs paramètres de la fonction de répartition de la grandeur des particules primaires de corpuscules portées par le fluide, **caractérisé** de sorte que :
parallèlement, le signal à valeur maximale et la perte de signal temporelle du rayonnement thermique émanant des corpuscules après une stimulation pulsée, vont être simultanément saisi et interprété en l'espace d'un intervalle temporel donné.

10. Procédé pour la saisie et la caractérisation de corpuscules portés par le fluide selon la revendication 9, **caractérisé** de sorte que :
pour la détermination de paramètres de la fonction de répartition de la grandeur des particules primaires, une adaptation de la perte expérimentale du signal et de la température du fluide a lieu dans une bibliothèque de données correspondantes théoriques.

11. Procédé pour la saisie et la caractérisation de corpuscules portées par le fluide selon la revendication 9, **caractérisé** de sorte que :
la bibliothèque de données théoriques va être générée grâce à l'inclusion de modèles théoriques simultanément à l'interprétation.

12. Utilisation d'une unité de capteur selon l'une des revendications 6 à 8 dans un procédé selon l'une des revendications 9 à 11, **caractérisée** de sorte que :
grâce à l'interprétation du signal dispersé élastique, la grandeur de l'agrégat va être simultanément déterminée.
